Europäisches Patentamt

European Patent Office

Office européen des brevets

(11) Publication number: **0 363 072**
**A1**

## EUROPEAN PATENT APPLICATION

(21) Application number: 89309847.5

(22) Date of filing: 27.09.89

(51) Int. Cl.⁵: **G01S 17/87 , G01S 17/74 , G01S 17/88 , G05D 1/03**

(30) Priority: 28.09.88 GB 8822795

(43) Date of publication of application:
**11.04.90 Bulletin 90/15**

(84) Designated Contracting States:
**CH DE ES FR IT LI SE**

(71) Applicant: **THE GENERAL ELECTRIC COMPANY, p.l.c.**
**1 Stanhope Gate**
**London W1A 1EH(GB)**

(72) Inventor: **Corney, Paul James**
**No. 7 Lon-Y-Ffin St. Fagin's Court**
**St. Fagin Cardiff CF5 4ST(GB)**
Inventor: **Stuart, Sarah Jane**
**No. 3 Tiverton Drive**
**Nuneaton Warwickshire(GB)**

(74) Representative: **George, Sidney Arthur**
**The General Electric Company p.l.c. GEC Patent Department(Wembley Office) Hirst Research Centre East Lane**
**Wembley Middlesex, HA9 7PP(GB)**

(54) Automated vehicle control.

(57) A guided vehicle (2,3) determines its position relative to a number of uniquely-coded reflector boards (13) by scanning the boards with a rotating laser beam (14,15). In order to determine the position of a load (18) which is to be picked up by the vehicle, the laser beam scans three plain vertical retroreflective strips (19,20,21) which are affixed to the load at accurately known spacings. The position of the load is calculated from these spacings and from angles measured by the laser system. The calculations are continuously updated as the vehicle moves.

EP 0 363 072 A1

Fig.1.

Fig.3.

## Automated Vehicle Control

This invention relates to the control of automated vehicles which move around a site, such as a factory or a warehouse, in accordance with control signals generated by a computer. The invention is particularly relevant to vehicles which are controlled over radio or other remote control links and do not rely on guidance wires or tracks, and which are required to pick up, automatically, loads which are located on the site.

Our British Patent No: 2,143,395 discloses such a system in which a number of mobile trucks are controlled and guided under the overall control of a base station. The trucks are utilised to transfer material between a store area and a work position. Finished work-pieces are transferred by means of one of the trucks to a holding area for removal and utilisation as required. The base station allocates destinations to each of the trucks via a communication link, such as a radio or infra-red link.

Each vehicle has a scanning laser beam which rotates in azimuth so that it scans across a number of reflector boards which are spaced apart around the site. Each reflector board is provided with uniquely coded strips of a retro-reflective material which is such that the laser beam incident thereon is reflected back along the same path. Each vehicle is thereby able, using triangulation techniques, to determine its own position relative to any location within the site. Each vehicle monitors its own position as it moves along a path to its required destination, and continuously transmits its position back to the base station, so that the base station can control the truck movements so as to avoid collisions.

The retro-reflective stripes and the non-reflective stripes therebetween form a unique bar code on each reflector board. When the stripes are scanned sequentially by the laser beam, the first few stripes in the sequence provide a code which confirms that a reflector board has been found (as distinct from any other reflective body which might be encountered). The next stripes in the sequence identify the particular target board which is being interrogated, and the final stripe indicates the position of the end of the reflector board with a high degree of accuracy, for determination of the position of the vehicle.

Such a system does not, however, enable a vehicle to be guided automatically to a correct position for picking up a load.

It is an object of the present invention to provide a system which will enable such a vehicle to dock in the correct position in front of a load which is to be picked up by the vehicle.

According to the invention there is provided a vehicle control and guidance system, comprising a vehicle having motive power and steering and means for transmitting a directional laser beam which is scanned in a predetermined sense; at least three reflectors associated with a load which is to be picked up by the vehicle, the reflectors being spaced apart by predetermined horizontal distances and being located so as to be capable of intercepting the laser beam; and control means to utilise laser light reflected back to the vehicle by the reflectors to determine the relative positions of the vehicle and the load and to cause the vehicle to move into a required position for picking up the load.

An embodiment of the invention will now be described, by way of example, with reference to the accompanying drawings, in which

Figure 1 is a schematic block diagram of vehicle control and guidance apparatus.

Figure 2 illustrates an example of a coded reflective target,

Figure 3 is a schematic diagram showing a vehicle laser scanner and a load which is to be picked up by the vehicle.

Figure 4 shows an example of dimensions and spacing of load target strips, and

Figures 5 and 6 illustrate distances and angles used in position calculations.

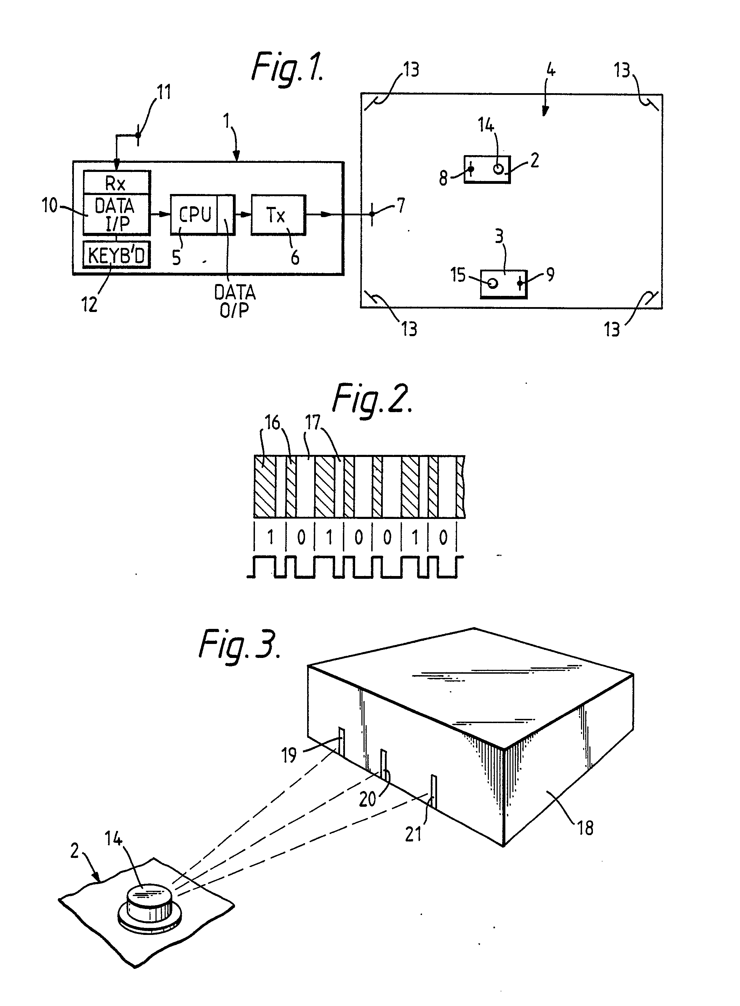

Referring to Figure 1, a controller 1 for controlling the movement of vehicles, such as vehicles 2 and 3, around an area 4 comprises a computer 5 which generates vehicle control signals which are fed to a radio transmitter 6. The signals are used to modulate a carrier wave which is transmitted via an antenna 7 and is received by antennas 8 and 9 on the vehicles 2 and 3. Data are fed into the computer 5 from data input means 10 which includes a radio receiver which receives position data from the vehicles 2 and 3 via an antenna 11. The data may alternatively be transmitted by other means, such as via an ultrasonic or laser link. The data input means may also comprise sensors for the automatic sensing of conditions within the area, and a keyboard 12 is provided for manual data entry.

The navigation system of each vehicle is preferably as described in our above-mentioned British patent No: 2,143,395. For navigation purposes, coded retro-reflective targets 13 are positioned around the area 4. Rotary laser scanners 14, 15 are fitted on the vehicles 2 and 3, respectively, and the navigation system of each vehicle continuously determines, from reflections from the coded targets, and by triangulation, the exact position of the respective vehicle relative to those targets. The data provided by the scanner on a vehicle

2

are decoded by a scanner interface processor (SIP).

Figure 2 shows an example of a coded reflective target 13 for determination of vehicle position The target has alternate reflective stripes 16 and non-reflective stripes 17. The widths of the stripes determine the code elements, so that a wide reflective stripe followed by a narrow non-reflective stripe represents a digital 1 element, and a narrow reflective stripe followed by a wide non-reflective stripe represents a digital 0 element.

Referring to Figure.3, the position of a load 18 is derived from angular measurements from a vehicle scanner 14 to each of three plain vertical load target strips 19, 20, 21 of retroreflective material, which are spaced apart on the load by accurately known distances. The strips may be 30mm wide, and the distance between the centreline of the strip 20 and the outer edge of each other strip may be 229mm. A position updating technique enables guidance commands to be generated at fixed intervals to dock the vehicle directly in front of the load.

The SIP software processes at a base level with two interrupts of equal priority. These are counter overflow interrupts and Marker/Data interrupts. Each revolution of the scanner 14 gives 1024 encoder counts. Using a phase-locked loop, each count is stepped up 32 times, using a divider stage, to 32,768 (32k) counts per revolution. The multiplied counts are fed to an 8-bit internal counter, which overflows every two revolutions. These are internally generated counter overflow interrupts. Marker pulses are emitted by the scanner when the laser is aligned with the axis of the vehicle and facing backwards. Each marker pulse generates its own marker interrupt. The count value of this marker is written to a 'marker buffer' store. Similarly, data interrupts occur when the scanner sees a load target strip edge. An interrupt is generated, and the count values at the rising and falling edges of a strip are recorded and written in a circular buffer to be processed later. These are externally generated marker and data interrupts.

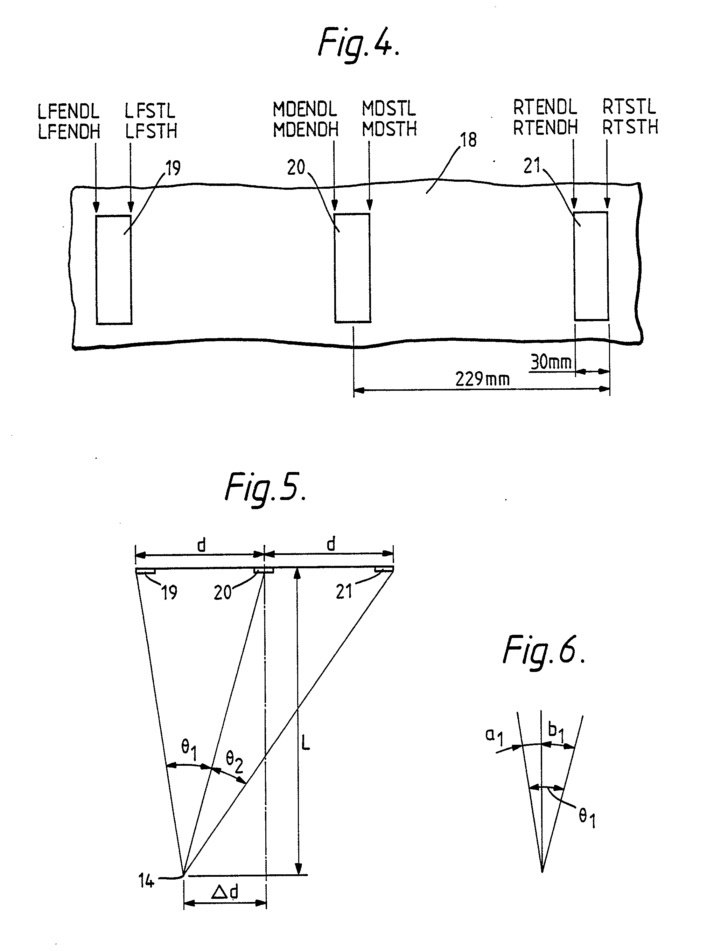

The program reads encoder values for the edges of the load target strips into the circular buffer. Figure 4 illustrates the target strips. Each edge requires 2 bytes to represent the 16-bit encoder count. These two registers are referred to hereafter as "lowbyte" and "hibyte". The six edges are therefore placed in twelve bytes in the circular buffer. Since the scanner rotates anticlockwise, the edges are read into the buffer in the order:

Right Start Edge (RTST)
Right End Edge (RTEND)
Mid Start Edge (MDST)
Mid End Edge (MDEND)
Left Start Edge (LFST)
Left End Edge (LFEND)

Using the middle strip values, the centre of the target is calculated. The angles measured from the left end edge to the centre and from the right start to the centre are the left hand angle (LANG) and the right hand angle (RANG), respectively.

The encoder values and angles LANG, RANG are output to a 'J' table address and monitored using a 'GEM 80' systems programmer. The addresses (J400 - J420) are used. An example readout is shown in Table 1.

3

| Location | Decimal Value | Hexadecimal Value | Target Position |
|----------|---------------|-------------------|-----------------|
| J400 | 768 | 300 | Marker Pulse |
| J401 | 0 | 0 | |
| J402 | 8338 | 2092 | RTST |
| | 126 { | | |
| J403 | 8464 | 2110 | RTEND |
| J404 | 6769 | 1A71 | MDST |
| | 120 { | | |
| J405 | 6889 | 1AE9 | MDEND |
| J406 | 7542 | 1076 | LFST |
| | 126 { | | |
| J407 | 7668 | 1DF4 | LFEND |
| J408 | 31123 | 799D | RANG |
| J409 | 719 | 2C9 | LANG |
| J410 | 768 | 300 | Marker Pulse |
| J411 | 0 | 0 | |

## Table 1

The value of the encoder count just after the middle strip was estimated as 1d56 hex. The strips on the bar-coded targets of Figure 2 are 15mm wide and 34 hex counts. The 3-strip load target has strips 30mm wide and therefore values of 70-80 hex counts are to be expected i.e. 112-128 counts. From Table 1 it can be seen that the strip widths are within these limits and the load target is being picked up around 1d56 hex counts.

Measurements have been made of the values of the strip edges and the angles to see how they vary at different distances from the target and if the target is moved through an angle to find some limits on the accuracy of the system.

At about 5m there is not enough resolution to calculate any difference in angle accurately, as the count changes only from 1-6 counts difference as the target is rotated. After 45° the scanner could not pick up the target, as the reflected signal could no longer be collected by the scanner and thus only marker pulses are received. Also the values of the two angles RANG and LANG vary, one becoming bigger than the other, depending on which way the target is rotated. Erratic readings were occasionally obtained from the circular buffer. Those errors were attributable to two possible sources:-

    i) Electrical noise. Shielding the scanner removed most of this.
    ii) Reflections from objects other than the scanner.

To remove these unwanted readings, three checks are added:-

    i) A check is added to allow only strip widths in the range 16-256 counts. These limits are used because at 1.5m, the strip widths are 100 counts and at 5.0m they are 30 counts.

    ii) The second check compares the width of the right strip and the middle strip to see whether they are within a certain tolerance, i.e. within 16 counts of each other. A difference of 16 counts is chosen since, even at 45° the strip widths differ by only 15 counts. If the two strip widths are found to differ by more than 16 counts, the read pointer in the circular buffer is decremented to the beginning of the strip that has just been read (i.e. the middle strip). It is assumed that no false readings will be given during the reading of the three-strip target.

These two checks are, however, not sufficient, because the program reads any three strips in a row if they are of the same width, e.g. a 100101 pattern on a bar coded target of the Figure 2 type would be

4

wrongly recognised as a load target. Therefore, another check is needed.

iii) The width of a strip is measured and compared with the width RANG (from the centre of target to the end). This strip to gap ratio should be 30:229, i.e. 1:7.6, using the dimensions of the target as in Figure 4. Hence, the program must check for RANG being between 7 and 8 times larger than the strip width.

The method of calculating the position of the load relative to the vehicle is as follows.

Referring to Figures 5 and 6,

d = width of target from centre to edge = 229mm

$\Delta$d = x displacement

L = y displacement

$\theta$ is divided into 2 angles $a_1$ and $b_1$ (Figure 6) and trigonometry used:-

$\theta = a_1 + b_1$ Therefore,

$$\tan a_1 = \frac{d - \Delta d}{L} \qquad \tan b_1 = \frac{\Delta d}{L}$$

From the general equation

$$(A + B) = \frac{\tan A \, \tan B}{1 - \tan A \, \tan B}$$

we can derive

$$\tan \Theta_1 = \frac{\dfrac{d - \Delta d}{L} \quad \dfrac{+\Delta d}{L}}{L - \dfrac{(d - \Delta d)\, \Delta d}{L^2}}$$

$$= \frac{Ld}{L^2 - \Delta d(d - \Delta d)}$$

Also $\quad \tan(b_1 + \Theta_2) = \dfrac{d + \Delta d}{L}$

$$\frac{\tan b_1 + \tan \Theta_2}{1 - \tan b_1 \tan \Theta_2} = \frac{d + \Delta d}{L}$$

$$\frac{\dfrac{\Delta d/L + \tan \Theta_2}{1 - \dfrac{\Delta d \tan \Theta_2}{L}}} = \frac{d + \Delta d}{L}$$

Let $\quad \tan \Theta_1 = t_1$
$\qquad \tan \Theta_2 = t_2$

$$\frac{\Delta d + Lt_2}{L - \Delta d t_2} = \frac{d + \Delta d}{L} \qquad (1)$$

$$t_1 = \frac{Ld}{L^2 - \Delta d\,(d - \Delta d)} \qquad (2)$$

By manipulation of these equations, two equations with the unknowns L and $\Delta d$ are obtained.

$L^2 t_2 - Ld = -dt_2 \Delta d - t_2 \Delta d^2 \qquad (3)$

$L^2 t_1 - Ld = dt_1 \Delta d - t_1 \Delta d^2 \qquad (4)$

Equations 3 and 4 are manipulated to find an equation which can be used to find L and d without iteration.

EP 0 363 072 A1

$$\Delta d = a \frac{\left[\frac{t_1^2}{t_2^2} - 1\right]}{4t_1^2 + \left(1 - \frac{t_1}{t_2}\right)^2} \qquad (5)$$

$$L = \sqrt{-d\,\Delta d - \Delta d^2 + \frac{d^2}{4t_2^2}} + \frac{d}{2t_2} \qquad (6)$$

By use of this technique, the vehicle can be moved automatically into the correct position for picking up the load, irrespective of the precise position of the load on the floor of the site.

**Claims**

1. A vehicle control and guidance system, comprising a vehicle (2,3) having motive power and steering and means (14,15) for transmitting a directional laser beam which is scanned in a predetermined sense; characterised by at least three reflectors (19,20,21) associated with a load (18) which is to be picked up by the vehicle, the reflectors being spaced apart by predetermined horizontal distances and being located so as to be capable of intercepting the laser beam; and control means to utilise laser light reflected back to the vehicle by the reflectors to determine the relative positions of the vehicle and the load and to cause the vehicle to move into a required position for picking up the load.

2. A system as claimed in Claim 1, characterised in that each reflector (19,20,21) comprises a strip of retro-reflective material having its long axis substantially vertical.

3. A system as claimed in Claim 1 or Claim 2, characterised in that said reflectors (19,20,21) lie in a common vertical plane.

4. A system as claimed in any preceding claim, characterised in that the control means includes means to generate clock pulses as the laser beam is scanned; means to count said clock pulses; means to register the count reached as the reflections from the reflectors (19,20,21)are sensed; and means to calculate said relative positions from the counts corresponding to the reflector positions and from the distance between the vehicle and the load.

5. A system as claimed in any preceding claim, characterised in that there are provided three of said reflectors (19,20,21); and in that the means to calculate said relative positions is operative to determine the position of the centre of width of the centre one of the three reflectors and the outside edges of the outer two reflectors from said counts.

7

## Fig.1.

## Fig.2.

## Fig.3.

## Fig.4.

LFENDL   LFSTL          MDENDL   MDSTL              RTENDL   RTSTL
LFENDH   LFSTH          MDENDH   MDSTH              RTENDH   RTSTH

19          20          18          21

229mm          30mm

## Fig.5.

d          d

19     20          21

θ₁     θ₂

L

14          Δd

## Fig.6.

a₁   b₁

θ₁

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | WO-A-8 702 484 (CATERPILLAR INC.)<br>* Page 7, line 9 - page 20, line 14 * | 1,3,4 | G 01 S 17/87<br>G 01 S 17/74<br>G 01 S 17/88<br>G 05 D 1/03 |
| A | | 5 | |
| D,Y | EP-A-0 185 816 (GEC)<br>* Page 3 to page 9; figures 2-4 * | 1,3,4 | |
| A | | 2,5 | |
| A | FR-A-2 495 797 (ONERA)<br>* Figure 1; page 4, line 27 - page 9, line 3 * | 1-5 | |
| A | EP-A-0 227 999 (ACME-CLEVELAND)<br>* Page 5, lines 38-50; figures 5,6 * | 1-5 | |
| A | US-A-4 225 226 (DAVIDSON et al.)<br>* Column 2 - column 4; figures 3-5 * | 1,3-5 | |
| A | MANUFACTURING TECHNOLOGY INTERNATIONAL -EUROPE-, no. 1, 1987, pages 233,235,236, London, GB; M. BEVAN: "Free ranging AGVs"<br>* Whole article * | 1 | |
| A | US-A-3 633 158 (HEIBEL)<br>* Column 5, line 74 - column 6, line 46; figure 4 * | 2,3 | TECHNICAL FIELDS SEARCHED (Int. Cl.5)<br><br>G 01 S<br>G 05 D |

The present search report has been drawn up for all claims

| Place of search | Date of completion of the search | Examiner |
|---|---|---|
| THE HAGUE | 10-01-1990 | DEVINE J.J |

EPO FORM 1503 03.82 (P0401)